# EUROPÄISCHE PATENTSCHRIFT

(11) **EP 1 742 828 B1**
(45) Veröffentlichungstag und Bekanntmachung des Hinweises auf die Patenterteilung: **19.08.2009**
(21) Anmeldenummer: 04724512.1
(22) Anmeldetag: 31.03.2004
(51) Int. Cl.: B62D 55/24

(54) **RAUPENGURT FÜR PISTENFAHRZEUG SOWIE HERSTELLUNGSVERFAHREN**
CRAWLER-TRACK FOR A SKI TRAIL GROOMING MACHINE AND PRODUCTION METHOD
CHENILLE POUR DAMEUSE ET SON PROCEDE DE PRODUCTION

(43) Veröffentlichungstag der Anmeldung: 17.01.2007
(73) Patentinhaber: Cortex Hümbelin AG, 5102 Rupperswil (CH)
(72) Erfinder: NUESCH, Walter, CH-9212 Arnegg (CH)
(74) Vertreter: Frauenknecht, Alois J.
(86) Internationale Anmeldenummer: PCT/CH2004/000194
(87) Internationale Veröffentlichungsnummer: WO 2005/095191

(56) Entgegenhaltungen:
- EP-A- 1 389 576
- WO-A-20/04033276
- DE-A- 3 530 686
- DE-A- 3 731 618

## Beschreibung

Raupen von Pistenfahrzeugen bestehen aus mehreren parallelen Gurten, welche durch Querträger miteinander verbunden sind. Herkömmliche Gurte dieser Art bestehen aus einem Elastomer, welches durch eine textile Karkasse verstärkt ist. Diese bekannten Karkassen bestehen aus mehreren übereinander geschichteten Bändern aus Polyamid-Gewebe. Die Lebensdauer dieser bekannten Gurte entspricht etwa einem Fünftel der Lebensdauer des Pistenfahrzeuges.

Weil Aramid gegenüber Polyamid eine wesentlich höhere Zugfestigkeit aufweist, kann die Karkasse grundsätzlich dünner ausgebildet werden. Dadurch wird die Standzeit der Gurte erhöht. Durch die wesentlich höhere Steifigkeit von Aramid gegenüber Polyamid wird zudem die Verletzungsgefahr beim Reissen eines Gurtes reduziert und die Lastverteilung auf die verschiedenen Gurte einer Raupe verbessert. Auf dieser Erkenntnis beruht ein als Laufband für Raupenfahrzeuge bezeichneter Stand der Technik (DE -A1- 35 30 686). Nachteilig bei diesem Gurt sind die hier eingesetzten relativ dicken Längsfäden aus Aramid; diese erfahren an den Umlenk- und Antriebsrädern eine hohe Biegung und neigen daher zum vorzeitigen Brechen.

Der vorliegenden Erfindung liegt die Aufgabe zugrunde, die gesamte Lebensdauer solcher Gurten und damit der Raupen wesentlich zu erhöhen. Diese Aufgabe wird durch die Merkmalskombination der Ansprüche gelöst.

Vorzugsweise bestehen die tragenden Kettenfäden aus mehreren Zwirnen und sind im entgegengesetzten Drehsinn der Zwirne gedreht. Die Zwirne ihrerseits sind im gleichen Drehsinn wie die Einzelfäden der Zwirne gedreht. Bei gleicher Anzahl Drehungen pro Laufmeter ergibt sich daraus, dass die Filamente im Kern der Zwirne annähernd parallel zur Längserstreckung der Zwirne verlaufen. Dadurch ergibt sich die höchstmögliche Zugfestigkeit und Steifigkeit der Zwirne. Dies verbessert insbesondere die Wechsel-Biegefestigkeit und damit die Standzeit der Gurten bzw. der Raupen markant.

Besonders hohe Standzeiten werden erreicht, wenn sämtliche tragenden Aramid-Kettgarne in einer gemeinsamen Fläche, also in einer einzigen Gewebelage, angeordnet sind. Durch diese Ausbildung wird eine gleichmässige Lastverteilung auf sämtliche tragende Kettgarne erreicht, auch über Umlenk- und Antriebswalzen. Wegen des mechanischen Verschleisses ist es vorteilhaft, die Gummischicht auf der Aussenseite des Gurtes dicker auszubilden als auf der Innenseite.

Zur Herstellung des Gurtes wird die Karkasse mit flüssigem Epoxyharz getränkt und das Epoxyharz mindestens teilweise ausgehärtet, so dass eine dünne Schicht Kunstharz von etwa 1 % des Karkassengewichts die Karkasse umgibt. Die derart vorbereitete Karkasse wird in eine Latexlösung passend zu dem aufzubringenden Elastomer getaucht. Nach dem Aushärten ummantelt eine Latexschicht von mindestens 10 % des Karkassengewichtes die Karkasse. Auf diese Latexschicht wird beidseitig eine Schicht Elastomer bei etwa 160° durch Kalandrieren aufvulkanisiert.

Nachfolgend wird ein Ausführungsbeispiel der Erfindung anhand der Zeichnung erläutert. Darin zeigt:
- Fig. 1: eine perspektivische Teilansicht einer Raupe eines Pistenfahrzeuges,
- Fig. 2: einen Längsschnitt durch einen Gurt,
- Fig. 3: eine Teilansicht einer Karkasse,
- Fig. 4: den Aufbau eines Zwirns
- Fig. 5: den Aufbau eines Cord-Garns,
- Fig. 6: eine weitere Ausführungsform im Querschnitt, sowie
- Fig. 7 und: Fig. 8 zwei Varianten der Verbindung der Bandenden zu einem Endlosgurt im Längsschnitt.

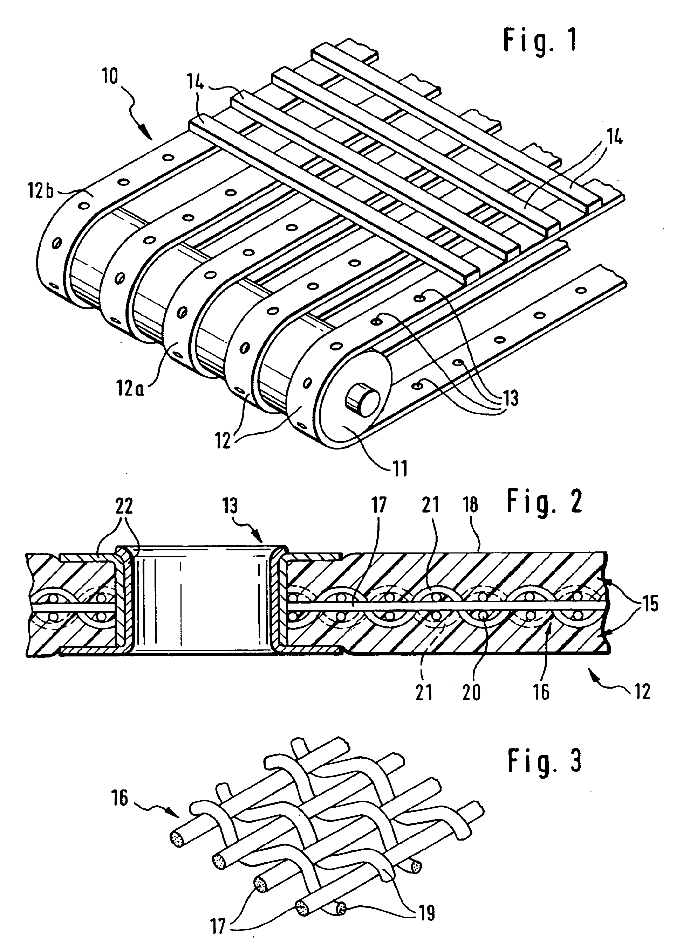

Fig. 1 zeigt schematisch den Aufbau einer Raupe 10 eines Pistenfahrzeuges. Die Raupe 10 ist über zwei voneinander beabstandete Walzen 11 geführt, von welchen eine mit einer Antriebseinheit verbunden ist. Die Raupe 10 besteht aus mehreren parallelen Gurten 12 mit je mindestens einer Reihe von Durchgangslöchern 13. Querträger 14 aus Aluminium sind über die Löcher 13 mit sämtlichen Gurten 12 verschraubt. Die Längsrichtung der Querträger 14 verläuft parallel zu den Achsen der Walzen 11.

Die Gurte 12 besteht aus einem Elastomer 15, in welches eine textile Karkasse 16 eingebettet ist. In den dargestellten Beispielen gemäss Fig. 2 und 3 besteht die Karkasse 16 aus einer einzigen Gewebeschicht, in welcher die tragenden Kettgarne 17 ungewellt parallel zu den Aussenflächen 18 des Gurtes 12 verlaufen und aus Aramid bestehen. Im Ausführungsbeispiel nach Fig. 3 sind die Kettgarne 17 durch Schussfäden 19 aus Polyamid miteinander verbunden. Im Ausführungsbeispiel nach Fig. 2 hat die Karkasse 16 beidseits der Kettgarne 17 geradlinig durchlaufende Schussgarne 20. Auf der einen Seite der Kettgarne 17 können diese geradlinigen Schussgarne 20 ebenfalls aus Aramid bestehen. Dies ergibt eine besonders hohe Durchstossfestigkeit der Karkasse 16. Die Schussgarne 20 sind durch gewellte Kettfäden 21 aus Polyamid miteinander verbunden. Diese gewellten Kettfäden 21 tragen praktisch nichts zur Längsfestigkeit- und steifigkeit des Gurtes 12 bei, sondern dienen lediglich zum Zusammenhalt der Karkasse 16. Wie Fig. 2 zeigt, sind die Löcher 13 durch Hohlnieten 22 verstärkt.

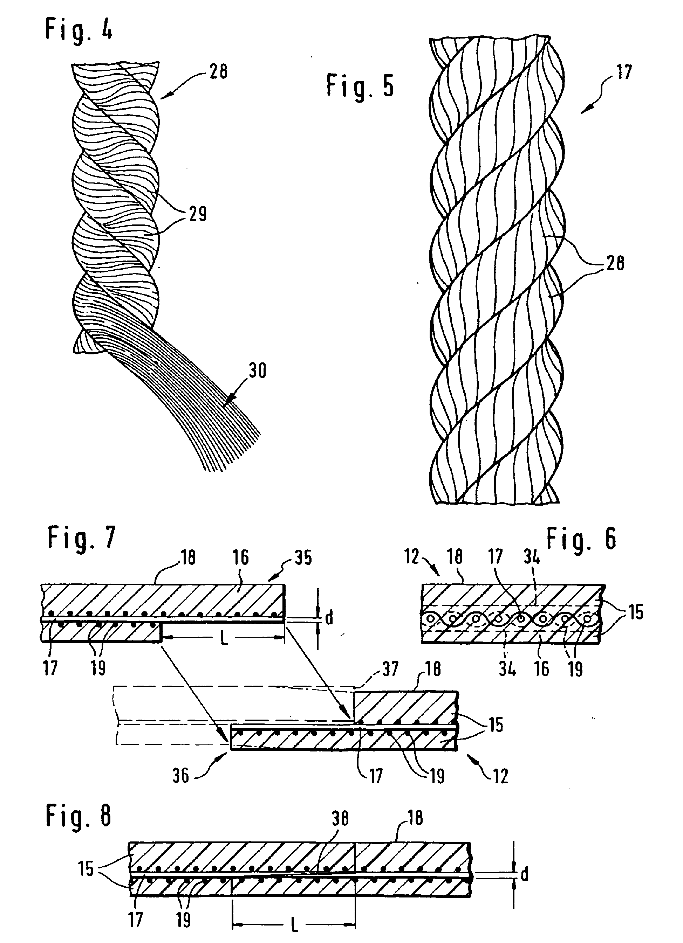

Fig. 4 und 5 zeigen den Aufbau der tragenden Kettgarne 17. Das Kettgarn 17 ist ein Cord, welcher aus drei Zwirnen 28 im entgegensetzten Drehsinn der Zwirne 28 gewunden ist. Im dargestellten Beispiel ist der Cord rechts oder Z-gewunden, wogegen der Zwirn 28 links oder S-gewunden ist. Die drei Einzelfäden 29 des Zwirns 28 sind im gleichen Drehsinn gewunden wie der Zwirn 28, im dargestellten Beispiel also links oder S. Jeder Faden 29 besteht aus mehreren hundert, z.B. etwa tausend Aramid-Filamenten 30. Die Windungszahl pro Meter der Filamente 30 im Faden 29 ist annähernd gleich der Windungszahl pro Meter der Fäden 29 im Zwirn 28 und (wenigstens für die mittlere Gurte 12a der Raupe 10) annähernd gleich der Windungszahl pro Meter der Zwirne 28 im Cord 17. Dies ergibt die höchstmögliche Steifigkeit und Zugsteifigkeit der tragenden Kettgarne 17. Die Windungszahlen sind in der Zeichnung übertrieben dargestellt. Als zweckmässig haben sich etwa 60 Windungen pro Meter erwiesen. Für die äusserste Gurte 12b der Raupe 10 oder des Pistenfahrzeuges kann es zweckmässig sein, die Windungszahl der Zwirne 28 im Cord 17 etwas höher zu wählen. Dadurch ist die Zugfestigkeit dieses Gurtes 12b geringer als jene der mittleren Gurte 12a. Dies kann beim Kurvenfahren von Vorteil sein.

Eine weitere Ausführungsform ist in Fig. 6 im Querschnitt ersichtlich. Die Karkasse 16 besteht in diesem Fall aus einem Gewebe gemäss Fig. 3, bei welchem die Schussfäden 19 erheblich dünner als die Kettgarne 17 sind, sowie aus je einem auf beiden Seiten dieses Gewebes aufgebrachten dünnen, beidseitig gummiertem Abdeckgewebe 34 aus Polyamid, Polyester oder Aramid. Statt dieses Abdeckgewebes kann auch eine faserverstärkte Elastomerfolie eingesetzt werden, z.B. mit Kurzfasern aus Aramid.

Zur Herstellung der Endlos-Gurte werden gemäss Fig. 7 die beiden Enden 35,36 eines Bandes von beispielsweise 10 m Länge mit dem beschriebenen Aufbau über eine Länge von z.B. 30 cm von entgegengesetzten Seiten her parallel zu den Aussenflächen 18 bis zu den tragenden Kettgarnen 17 abgeschliffen. Die beiden Enden 35,36 werden über die Länge L überlappend so zusammenvulkanisiert, dass sich die Kettgarne 17 der gegenüberliegenden Enden 35,36 berühren. Dadurch wird eine Zugfestigkeit der Verbindung von über 70 % der Zugfestigkeit des Gurtes erreicht.

Bei herkömmlichen Gurten mit mehreren Gewebelagen der Karkasse ist die oben beschriebene Verbindungsart nicht möglich. Bei Gurten dieser Art Raupenfahrzeuge sind die Bandenden entweder durch metallische Scharniere oder durch schliffen, vgl. Fig. 8. Die beiden Enden 35,36 werden über die Länge L überlappend so zusammenvulkanisiert, dass sich die Kettgarne 17 der gegenüberliegenden Enden 35,36 berühren. Dadurch wird eine Zugfestigkeit der Verbindung von über 70 % der Zugfestigkeit des Gurtes erreicht.

Bei herkömmlichen Gurten mit mehreren Gewebelagen der Karkasse ist die oben beschriebene Verbindungsart nicht möglich. Bei Gurten dieser Art Raupenfahrzeuge sind die Bandenden entweder durch metallische Scharniere oder durch Schräg- oder Fingerspleissung miteinander verbunden. All diese Verbindungsarten erreichen nicht die Festigkeit der oben beschriebenen Überlappungs-Spleissung.

Bei der Überlappungs-Verbindung, Fig. 7, entsteht an den beiden Aussenflächen 18 je eine Stufe 37 von der Höhe des Durchmessers d der tragenden Kettgarne 17. Bei der Anwendung in Raupen von Pistenfahrzeugen stören diese Stufen 17 kaum. Bei anderen Anwendungen kann es zweckmässig sein, diese Stufen 17 abzuschleifen, was in Fig. 7 strichpunktiert angedeutet ist.

Eine noch höher belastbare Verbindung ergibt sich, wenn die Schliff-Flächen 38 um einen geringen Winkel d/L gegenüber den Aussenflächen 18 geneigt sind, wie dies in Fig. 8 dargestellt ist. Dabei entfallen die Stufen 37. Die Biegesteifigkeit des Gurts ist auch über die Verbindungsstelle hinweg annähernd konstant. Der Winkel d/L ist in der Grössenordnung von 0,05°, jedenfalls geringer als 0,5°. Die Schliff-Flächen 38 sind immer noch annähernd parallel zu den Aussenflächen 18, dies im Gegensatz zu herkömmlichen Schräg-Spleissungen.

## Patentansprüche

1. Raupe (10) für ein Pistenfahrzeug, umfassend mehrere parallele Gurten (12,12a,12b), welche durch Querträger (14) miteinander verbunden sind, wobei die Gurten (12) in Längsrichtung mindestens eine Reihe von zylindrischen Löchern (13) zum Befestigen von Querträgern (14) aufweisen, wobei in den Gurten (12) eine durch Elastomer (15) verstärkte, textile Karkasse (16) vorgesehen ist, wobei die Karkasse (16) mindestens ein Gewebe umfasst, dessen tragende Kettfäden (17) ungewellt parallel zu den Aussenflächen (18) des Gurtes (12) verlaufen und aus Aramid bestehen, **dadurch gekennzeichnet, dass** die tragenden Kettfäden (17) Cord-Garne sind, die aus mehreren Zwirnen (28) im entgegengesetzten Drehsinn der Zwirne (28) gewunden sind, und wobei die Zwirne (28) im gleichen Drehsinn wie die Einzelfäden (29) der Zwirne (28) gewunden sind.

2. Raupe (10) nach Anspruch 1, wobei im Gurt (12,12a,12b), die Anzahl Windungen der Filamente (30) pro Meter Faden (29) annähernd gleich der Anzahl Windungen der Fäden (29) pro Meter Zwirn (28) und vorzugsweise annähernd gleich der Anzahl Windungen der Zwirne (28) pro Meter Cord sind.

3. Raupe (10) nach Anspruch 1 oder 2, wobei die Karkassen (16) der Gurten (12,12a, 12b) mit einem Kunstharz ummantelt und getränkt sind, auf welchem der Elastomer (15) haftet, und wobei das Gewicht des Kunstharzes vorzugsweise weniger als 4 % des Karkassengewichts beträgt.

4. Raupe nach einem der Ansprüche 1 bis 3, wobei die Löcher (13) in den Gurten (12,12a) mittels Hochdruck-Wasserstrahl geschnitten und vorzugsweise mittels Hohlnieten (22) verstärkt sind.

5. Raupe nach einem der Ansprüche 1 bis 4, wobei der Elastomer (15) in den Gurten (12,12a,12b) als Schicht ausgebildet ist und auf der einen Seite der Karkasse (16) dicker ist als auf der gegenüberliegenden Seite.

6. Raupe nach einem der Ansprüche 1 bis 5, wobei die Zugsteifigkeit der äussersten Gurte (12b) geringer ist als die Zugsteifigkeit der mittleren Gurte (12a).

7. Verfahren zur Herstellung einer Raupe (10) nach einem der Ansprüche 1 bis 6, welche mehrere parallele Gurten (12,12a,12b) umfasst, die durch Querträger (14) miteinander verbunden sind, wobei die Gurten (12) in Längsrichtung mindestens eine Reihe von zylindrischen Löchern (13) zum Befestigen von Querträgern (14) aufweisen, wobei in den Gurten (12) eine durch Elastomer (15) verstärkte textile Karkasse (16) vorgesehen ist, wobei die Karkasse (16) mindestens ein Gewebe umfasst, dessen tragende Kettfäden (17) ungewellt parallel zu den Aussenflächen (18) des Gurtes (12) verlaufen und aus Aramid bestehen, wobei die tragenden Kettfäden (17) Cord-Garne sind, die aus mehreren Zwirnen (28) im entgegengesetzten Drehsinn der Zwirne (28) gewunden sind, und wobei die Zwirne (28) im gleichen Drehsinn wie die Einzelfäden (29) der Zwirne (28) gewunden sind, deren tragende Kettfäden (17) mit einem Kunstharz ummantelt und getränkt werden, wobei der Kunstharz mindestens teilweise ausgehärtet und anschliessend mit einer Latex-Lösung umgeben wird, die ebenfalls mindestens teilweise ausgehärtet wird, wobei beidseitig auf die so vorbehandelte Karkasse je eine Elastomerschicht aufvulkanisiert wird, und wobei anschliessend die Löcher geschnitten werden.

## Claims

1. A crawler (10) for a snow groomer, comprising several parallel belts (12, 12a, 12b), which are connected to one another by means of crossbars (14), wherein the belts (12) have in the longitudinal direction at least one row of cylindrical holes (13) for the attachment of crossbars (14), wherein a textile carcass (16) reinforced by elastomer (15) is provided in the belts (12), wherein the carcass (16) comprises at least one woven fabric, of which the supporting warp threads (17) extend in a non-undulating manner parallel to the outer surfaces (18) of the belt (12) and consist of aramid, **characterised in that** the supporting warp threads (17) are cord yarns which are wound from several twines (28) in the opposite direction of rotation of the twines (28), and wherein the twines (28) are wound in the same direction of rotation as the individual threads (29) of the twines (28).

2. A crawler (10) according to Claim 1, wherein in the belt (12, 12a, 12b) the number of turns of the filaments (30) for each meter of thread (29) is approximately equal to the number of turns of the threads (29) for each meter of twine (28) and is preferably approximately equal to the number of turns of the twines (28) for each meter of cord.

3. A crawler (10) according to Claim 1 or 2, wherein the carcasses (16) of the belts (12, 12a, 12b) are coated and saturated with a synthetic resin to which the elastomer (15) adheres, and wherein the weight of the synthetic resin is preferably less than 4 % of the carcass weight.

4. A crawler according to one of Claims 1 to 3, wherein the holes (13) in the belts (12, 12a) are cut by means of high-pressure water jet and are preferably reinforced by means of hollow rivets (22).

5. A crawler according to one of Claims 1 to 4, wherein the elastomer (15) in the belts (12, 12a, 12b) is a layer and is thicker on one side of the carcass (16) than on the opposite side.

6. A crawler according to one of Claims 1 to 5, wherein the tensile rigidity of the outermost belt (12b) is less than the tensile rigidity of the middle belt (12a).

7. A method for producing a crawler (10) according to one of Claims 1 to 6, which comprises several parallel belts (12, 12a, 12b) which are connected to one another by means of crossbars (14), wherein the belts (12) have in the longitudinal direction at least one row of cylindrical holes (13) for the attachment of crossbars (14), wherein a textile carcass (16) reinforced by elastomer (15) is provided in the belts (12), wherein the carcass (16) comprises at least one woven fabric, of which the supporting warp threads (17) extend in a non-undulating manner parallel to the outer surfaces (18) of the belt (12) and consist of aramid, wherein the supporting warp threads (17) are cord yarns which are wound from several twines (28) in the opposite direction of rotation of the twines (28), and wherein the twines (28) are wound in the same direction of rotation as the individual threads (29) of the twines (28), of which the supporting warp threads (17) are coated and saturated with a synthetic resin, wherein the synthetic resin is at least partially hardened and then surrounded with a latex solution which is similarly at least partially hardened, wherein respective elastomer layers are vulcanised onto both sides of the carcass pretreated in this way, and wherein the holes are then cut.

## Revendications

1. Chenille (10) pour dameuse, comprenant plusieurs sangles (12, 12a, 12b) parallèles, lesquelles sont reliées entres elles par des traverses (14), les sangles (12) présentant, dans le sens longitudinal, au moins une rangée de trous (13) cylindriques pour la fixation de traverses (14), une carcasse (16) textile renforcée par de l'élastomère (15) étant prévue dans les sangles (12), la carcasse (16) comprenant au moins un tissu dont les fils de chaîne (17) porteurs s'étendent de manière non ondulée, parallèlement aux surfaces extérieures (18) de la sangle (12), et sont composés d'aramide, **caractérisée en ce que** les fils de chaîne (17) porteurs sont des filés-cordes qui sont torsadés à partir de plusieurs fils-retors (28), dans le sens de rotation opposé au sens des fils-retors (28), les fils-retors (28) étant torsadés dans le même sens de rotation que les fils individuels (29) des fils-retors (28).

2. Chenille (10) selon la revendication 1, dans laquelle dans la sangle (12, 12a, 12b), le nombre de spires des filaments (30) par mètre de fil (29) est sensiblement égal au nombre de spires des fils (29) par mètre de fil-retors (28) et, de préférence, sensiblement égal au nombre de spires des fils-retors (28) par mètre de corde.

3. Chenille (10) selon la revendication 1 ou 2, dans laquelle les carcasses (16) des sangles (12, 12a, 12b) sont enrobées et imprégnées avec une résine synthétique sur laquelle adhère l'élastomère (15), et dans laquelle le poids de la résine synthétique est de préférence inférieur à 4 % du poids de carcasse.

4. Chenille selon une des revendications 1 à 3, dans laquelle les trous (13) sont découpés dans les sangles (12, 12a) au moyen d'un jet d'eau haute pression et sont de préférence renforcés à l'aide de rivets creux (22).

5. Chenille selon une des revendications 1 à 4, dans laquelle l'élastomère (15) est réalisé sous forme de couche dans les sangles (12, 12a, 12b) et est plus épais sur un côté de la carcasse (16) que sur le côté opposé.

6. Chenille selon une des revendications 1 à 5, dans laquelle la rigidité en traction des sangles extérieures (12b) est plus faible que la rigidité en traction des sangles du milieu (12a).

7. Procédé de fabrication d'une chenille (10) selon une des revendications 1 à 6, comprenant plusieurs sangles (12, 12a, 12b) parallèles qui sont reliées entres elles par des traverses (14), les sangles (12) présentant, dans le sens longitudinal, au moins une rangée de trous (13) cylindriques pour la fixation de traverses (14), une carcasse (16) textile renforcée par de l'élastomère (15) étant prévue dans les sangles (12), la carcasse (16) comprenant au moins un tissu dont les fils de chaîne (17) porteurs s'étendent de manière non-ondulée, parallèlement aux surfaces extérieures (18) de la sangle (12), et sont composés d'aramide, fils de chaîne (17) porteurs étant des filés-cordes qui sont torsadés à partir de plusieurs fils-retors (28), étant torsadés dans le sens de rotation opposé au sens des fils-retors (28), les fils-retors (28) étant torsadés avec le même sens de rotation que les fils individuels (29) des fils-retors (28) dont les fils de chaîne (17) porteurs sont enrobés et imprégnés avec une résine synthétique, la résine synthétique étant au moins partiellement durcie et enveloppée ensuite d'une solution de latex qui est également au moins partiellement durcie, une couche d'élastomère étant appliquée par vulcanisation sur les deux côtés de la carcasse ainsi prétraitée, et les trous étant découpés ensuite.
